# EUROPÄISCHE PATENTSCHRIFT

(11) **EP 1 834 160 B1**
(45) Veröffentlichungstag und Bekanntmachung des Hinweises auf die Patenterteilung: **26.04.2017**
(21) Anmeldenummer: 05824630.7
(22) Anmeldetag: 09.12.2005
(51) Int. Cl.: G01F 23/296

(54) **ULTRASCHALL-FÜLLSTAND-MESSVORRICHTUNG FÜR EIN BEHÄLTNIS**
ULTRASONIC FILLING LEVEL MEASURING DEVICE FOR A CONTAINER
DISPOSITIF DE MESURE DE NIVEAU DE FLUIDE PAR ULTRASONS POUR UN RÉCIPIENT

(30) Priorität: 13.12.2004 DE 102004059964
(43) Veröffentlichungstag der Anmeldung: 19.09.2007
(73) Patentinhaber: Truma Gerätetechnik GmbH & Co. KG, 85640 Putzbrunn (DE)
(72) Erfinder: VOLKWEIN, Thomas, 85652 Pliening (DE); BORNEMANN, Lars, 83254 Breitbrunn (DE)
(74) Vertreter: Müller Hoffmann & Partner
(86) Internationale Anmeldenummer: PCT/EP2005/013256
(87) Internationale Veröffentlichungsnummer: WO 2006/063742

(56) Entgegenhaltungen:
- EP-A- 0 556 557
- EP-A- 0 961 106
- DE-A1- 4 223 346
- DE-A1- 4 234 300
- DE-A1- 19 643 956
- US-A- 5 438 868
- US-B1- 6 386 018

## Beschreibung

Die Erfindung betrifft eine Ultraschall-Messvorrichtung für ein Behältnis sowie ein Verfahren zur Bestimmung eines Nutzsignals aus einem mit einem Störsignal überlagerten Ultraschallsignal.

Geschlossene Gasflaschen mit flüssigem Inhalt finden vielfältige Anwendung in Bereichen der Industrie und des alltäglichen Lebens, beispielsweise als Treibgasflaschen für Gabelstapler oder als Gasflasche zur Energieversorgung im Campingbereich. Ultraschallmessungen zur Füllstandsbestimmung der Gasflaschen erlauben eine einfache und kostengünstige Instandhaltung. Ein mit Hilfe von Ultraschall arbeitendes Füllstandsmessgerät ist beispielsweise aus der EP-A-0955529 bekannt. Bei treibgasgetriebenen Gäbelstaplern ermöglicht es eine Füllstandskontrolle durch Ultraschallmessung. Unnötiges Wechseln teilentleerter Flaschen von Gabelstaplern oder auch ein Stehenbleiben mangels entleerter Treibgasflaschen lässt sich somit verhindern.

Die nachveröffentlichte DE-A-103 31 044 betrifft eine Haltevorrichtung für ein Behältnis und für eine Füllstandsmesseinrichtung zur Messung des Füllstands eines Mediums in dem Behältnis. Die Ankoppel-/Haltevorrichtung umfasst eine Behältnisaufnahme und eine Arretiereinrichtung, die zwischen wenigstens einer Offenstellung, in der das Behältnis frei bewegbar ist, und einer Geschlossenstellung, in der das Behältnis in der Behältnisaufnahme arretiert ist, verstellbar ist. Dabei ist die Füllstandsmesseinrichtung in der Geschlossenstellung an eine Aussenwand des Behältnisses andrückbar und in der Offenstellung vom Behältnis entfernbar. Von einem Bediener sind hierzu keine zusätzlichen Handlungen nötig, das heisst, das Andrücken bzw. Entfernen erfolgt automatisch beim Öffnen und Schließen der Arretiereinrichtung.

Bei derartigen Ultraschall-Messvorrichtungen dient ein Ultraschallwandler zur Einkopplung eines Ultraschallsignals von unten durch die Behältniswand in das Medium. Das Ultraschallsignal wird nach Durchlaufen des Mediums bis zu einer Füllhöhe an einer Phasengrenze reflektiert und läuft zum Ultraschallwandler zurück, wobei die Phasengrenze beispielsweise die flüssige/gasförmige Phase eines als Medium dienenden verflüssigten Treibgases trennt. Aus der Laufzeit des reflektierten und vom Ultraschallwandler empfangenen Ultraschallsignals lässt sich die Füllstandshöhe ermitteln. Als unerwünschter Nebeneffekt dieser Ultraschallmessung treten beim Einkoppeln des Ultraschalls in die Behältniswand Transversalwellen auf, die sich in der Behältniswand ausbreiten. Diese Transversalwellen sind physikalisch auf die Formelastizität der als Festkörper ausgebildeten Behältniswand zurückzuführen. In Abhängigkeit von Merkmalen des Behältnisses wie der Geometrie, der Wandstärke, dem Wandaufbau inklusive Lackierung sowie der gewählten Frequenz des Ultraschallsignals treten diese Transversalwellen unterschiedlich stark auf und führen zu einem Störsignal, das gemeinsam mit dem an der Phasengrenze flüssig/gasförmig reflektierten und zur Füllstandsbestimmung geeigneten Nutzsignal vom Ultraschallwandler empfangen wird. Überlagern sich Störsignal und Nutzsignal oder liegt das Störsignal in einem möglichen Laufzeitbereich des zur Füllstandsbestimmung dienenden Nutzsignals, ist eine Trennung zwischen Störsignal und Nutzsignal nicht ohne weiteres möglich, wodurch die Füllstandsmessung erheblich erschwert wird.

Aus der EP 0 556 557 A1 ist ein Verfahren zur Aufnahme eines elektromagnetischen Ultraschallwandlers bekannt. Die Ultraschallwellen werden nicht in dem Wandler selbst, sondern in einem sich an den Wandler anschließenden ferritischen Stahl, also im Messobjekt selbst erzeugt. Der Wandler ist bezüglich des Rohrsegments, an dem er angebracht ist, symmetrisch angeordnet.

Aus der DE 42 34 300 A1 ist ein Füllstand-Messverfahren bekannt, bei dem die bei einer Befüllung oder Entleerung eines Behälters auftretende, durch sich verändernde Signallaufzeit hervorgerufene zeitliche Verschiebung eines Nutzechos erfasst und ausgewertet wird.

In der US 6 386 018 A wird eine Anordnung mit zwei voneinander getrennt an einem Rohrelement angeordneten Ultraschallwandlern beschrieben. Dabei empfängt der eine Wandler das Ultraschallsignal, das von dem anderen Wandler abgegeben und zum Beispiel an der Oberfläche einer in dem Rohrelement vorhandenen Flüssigkeit reflektiert wird.

Der Erfindung liegt die Aufgabe zugrunde, ein Füllstandsmesssystem mit einer Ultraschall-Messvorrichtung und einem Behältnis anzugeben, mit dem bei einer Ultraschallmessung das durch die Behältniswand hervorgerufene Störsignal nicht oder verglichen mit einem Nutzsignal deutlich abgeschwächt und/oder zeitlich verzögert zum Einkoppelort des Ulträschallwandlers zurückkehrt.

Diese Aufgabe wird erfindungsgemäß durch ein Füllstandsmesssystem mit den Merkmalen von Anspruch 1 gelöst. Bevorzugte Ausführungsformen sind den abhängigen Ansprüchen zu entnehmen und/oder werden in der weiteren Beschreibung erläutert.

Gemäß der Erfindung weist das Füllstandsmesssystem eine Ultraschall-Messvorrichtung und ein Behältnis auf. Die Ultraschall-Messvorrichtung weist einen Ultraschallwandler zum Senden von Ultraschallsignalen in das zur Aufnahme eines Mediums geeignete Behältnis und zum Empfangen von Ultraschallsignalen aus dem Behältnis auf, wobei eine den Ultraschallwandler tragende Ankoppelvorrichtung zur Bildung einer zur Ultraschallübertragung geeigneten Ankopplung zwischen dem Ultraschallwandler und einer äußeren Oberfläche des Behältnisses dient und eine vorbestimmte Ausrichtung zwischen dem Ultraschallwandler und dem Behältnis derart bereitstellt, dass die Ankopplung des Ultraschallwandlers an das Behältnis asymmetrisch erfolgt. Dies hat zur Folge, dass der Ultraschallwandler und das Behältnis keine gemeinsame Symmetrieebene haben.

Symmetrieebenen des Ultraschallwandlers beziehen sich in dieser Anmeldung durchweg auf Symmetrieebenen des Ultraschallkopfs als Ultraschall erzeugendes Element, also beispielsweise einer schwingenden Membran oder eines Piezokristalls, und betreffen nicht Symmetrieebenen des Gehäuses des Ultraschallwandlers oder weiterer Bestandteile. Symmetrieebenen des Behältnisses beziehen sich ausdrücklich auch auf Teile des Behältnisses, an welche der Ultraschallwandler mit Hilfe der Ankoppelvorrichtung angekoppelt ist.

Wird beispielsweise ein Ultraschallwandler an einen zylinderförmigen Teil einer zylinderförmigen Gasflasche mit Flaschenhals angekoppelt, so enthält der zylinderförmige Teil eine Querschnittsebene als Symmetrieebene. Diese Querschnittsebene stellt jedoch keine Symmetrieebene der gesamten Gasflasche mit Flaschenhals dar. Dennoch wird diese Symmetrieebene als Symmetrieebene eines Teils des Behältnisses, nämlich z.B. des zylindrischen Teils, an welches der Ultraschallwandler ankoppelt, definiert und mit den Symmetrieebenen des Ultraschallwandlers verglichen. Als gemeinsam sind zwei Symmetrieebenen in dieser Anmeldung definiert, falls sie im dreidimensionalen Raum identisch sind, d.h. aufeinander liegen. Liegen zwei Symmetrieebenen im dreidimensionalen Raum lediglich parallel zueinander, so sind sie per Definition nicht gemeinsam.

Eine mit Hilfe der Ankoppelvorrichtung asymmetrisch bereitgestellte Ausrichtung zwischen dem Ultraschallwandler und dem Behältnis führt zu einer asymmetrischen Ausbreitung der Ultraschallwellen des Ultraschallsignals innerhalb der Wand des Behältnisses, da die Symmetrieebenen des Ultraschallfelds naturgemäß den Symmetrieebenen des Ultraschallwandlers entsprechen. Eine derartige asymmetrische Ausrichtung verhindert somit, dass die Ultraschallwelle des Störsignals lediglich durch gerichtetes Umlaufen der Behältniswand zum Einkoppelort zurückkehrt und dort als starkes Störsignal empfangen wird. Zusätzlich ermöglicht die asymmetrische Ausrichtung ein so genanntes Totlaufen der Welle innerhalb der Behältniswand, wodurch das Störsignal nicht, sehr schwach oder auch zeitlich dem Nutzsignal mit großem Zeitabstand nachfolgend empfangen wird.

Bevorzugt ist das Medium innerhalb des Behältnisses ein Flüssiggas und das Behältnis ist eine Gasflasche, so dass beispielsweise ein zur Ermittlung der Füllhöhe des Behältnisses geeignetes Nutzsignal durch Reflexion an der Phasengrenze zwischen Flüssigkeit und Gas innerhalb des Behältnisses zum Einkoppelort reflektiert wird und dort vom Ultraschallwandler als Nutzsignal empfangen wird.

In einer vorteilhaften Ausführungsform weist der Ultraschallwandler keine gemeinsame Symmetrieebene mit der Ankoppelvorrichtung auf. Eine vorteilhafte symmetrische Ausrichtung der Ankoppelvorrichtung zum Behältnis führt bei dieser Ausführungsform zu einer asymmetrischen Ausrichtung zwischen dem Ultraschallwandler und dem Behältnis.

Das Behältnis weist einen zylinderförmigen Teil auf und die Ankoppelvorrichtung ist zur Ankopplung des Ultraschallwandlers an die äußere Oberfläche des zylinderförmigen Teils des Behältnisses vorgesehen. Als Behältnis mit zylinderförmigem Teil eignet sich insbesondere eine Gasflasche, an die die Ankoppelvorrichtung bei liegender Anordnung der Gasflasche den Ultraschallwandler in vorteilhafter Weise von unten an die äußere Oberfläche des zylinderförmigen Teils des Behältnisses presst. Eine derartige Anordnung von Behältnis und Ankoppelvorrichtung ist insbesondere zur Verbrauchskontrolle der Treibgasflaschen von treibgasbetriebenen Gabelstaplern geeignet.

Vorteilhaft ist es, eine feste Ausrichtung des Ultraschallwandlers zum Behältnis durch Klebung der Ankoppelvorrichtung an das Behältnis herbeizuführen. Denkbar ist, die Ankoppelvorrichtung durch Klebung an der äußeren Oberfläche des Behältnisses zu fixieren und den Ultraschallwandler mittels einer Federkraft an die äußere Oberfläche des Behältnisses anzukoppeln.

Bei einer besonders vorteilhaften Ausführungsform ist eine feste Ausrichtung des Ultraschallwandlers zum Behältnis durch eine an das Behältnis anpressbare Ankoppelvorrichtung herstellbar. Vorteilhaft ist es, den Ultraschallwandler mittels einer Federkraft an das Behältnis anzupressen. Eine der Federkraft zugrunde liegende Spannung innerhalb der Feder kann beispielsweise durch Spannen der Feder mit Hilfe der Gewichtskraft des Behältnisses hergestellt werden. Hierbei wird beispielsweise das Behältnis von oben auf die Ankoppelvorrichtung platziert.

Ebenso ist es von Vorteil, die Anpressung des Ultraschallwandlers an das Behältnis mit einem die Ankoppelvorrichtung und das Behältnis umschließenden Spanngurt herzustellen. Erfolgt die Anpressung des Ultraschallwandlers an das Behältnis mit einer über die Ankoppelvorrichtung an den Ultraschallwandler übertragbaren Federkraft, so lässt sich die Federkraft durch Straffen des Spanngurts einstellen.

Ebenso ist es von Vorteil, die Anpressung des Ultraschallwandlers an das Behältnis durch Anklemmen der Ankoppelvorrichtung an das Behältnis herbeizuführen. Hierzu eignet sich beispielsweise eine Anklemmung zwischen Ankoppelvorrichtung und Behältnis mit Hilfe magnetischer Kräfte.

In vorteilhafter Weise besitzt die Oberfläche des Ultraschallwandlers zwei Symmetrieebenen und ist rechteckförmig ausgebildet. Eine derartige Ausbildung des Ultraschallwandlers bietet insbesondere verglichen mit einer runden Gestaltung der Oberfläche des Ultraschallwandlers den Vorteil, dass auf eine einfache Art und Weise eine Asymmetrie zwischen dem Ultraschallwandler und dem Behältnis bereitgestellt werden kann, was bei runder, rotationssymmetrischer Gestaltung der Oberfläche des Ultraschallwandlers aufgrund der dann vielfach vorhandenen Symmetrieebenen schwieriger oder gar nicht zu erreichen ist. Bei runder Gestaltung der Oberfläche des Ultraschallwandlers und bei dessen Ankopplung an einen zylinderförmigen Teil eines Behältnisses ist eine asymmetrische Ausrichtung zwischen dem Ultraschallwandler und dem Behältnis beispielsweise nicht zu erreichen.

Der Ultraschallwandler ist ein an sich bekannter Dickenschwinger. Ein piezoelektrischer Dickenschwinger schwingt beim Anlegen einer Wechselspannung an die beiden Elektroden nur in Richtung der Flächennormalen und führt longitudinale Schwingungen aus, wodurch in Richtung der Flächennormalen der Elektroden in vorteilhafter Weise Ultraschallwellen in die Wand eines Behältnisses übertragen werden können. Es ist jedoch ebenfalls denkbar, den Ultraschallwandler als Scherschwinger, Biegeschwinger oder als ein weiterer zur Ultraschallwandlung geeigneter Schwinger zu gestalten.

In einer anderen Ausführungsform weist der Ultraschallwandler keine Symmetrieebene auf. Dies ermöglicht eine Vielzahl an Gestaltungsmöglichkeiten zur Fixierung des Ultraschallwandlers innerhalb der Ankoppelvorrichtung als auch zur Gestaltung der Ankoppelvorrichtung im Hinblick auf die Ankopplung des Ultraschallwandlers an das Behältnis, da die fehlende Symmetrieebene des Ultraschallwandlers per se eine asymmetrische Ausrichtung zwischen dem Ultraschallwandler und dem Behältnis mit sich bringt.

In vorteilhafter Weise enthält die Ultraschall-Messvorrichtung eine Speichereinrichtung, mit der Signale als eine Abfolge von Messwerten speicherbar sind, eine Vergleichseinrichtung für verschiedene gespeicherte Ultraschallsignale derart, dass ein Störsignal als Abfolge von Werten ermittelbar ist, das einem in den Abfolgen der Messwerte der zu vergleichenden verschiedenen Ultraschallsignalen jeweils gemeinsam vorhandenen Messwertanteil entspricht. Eine in der Ultraschall-Messvorrichtung vorteilhaft ausgebildete Auswerteeinrichtung dient zum Ermitteln eines Nutzsignals durch Subtraktion des gespeicherten Störsignals von einem Ultraschallsignal. Das Störsignal ist bei wiederholter Ultraschallmessung und gleich bleibendem Einkoppelort des Ultraschallsignals ein konstantes Signal, das sich in vorteilhafter Weise mit Hilfe der Speichereinrichtung und der Vergleichseinrichtung als ein in verschiedenen Ultraschallsignalen gemeinsam vorhandener Signalanteil ermitteln lässt. Ebenso ist es denkbar, die Speichereinrichtung zum Speichern einer Mehrzahl von verschiedenen Behältnissen zugeordneten Störsignalen zu verwenden. Somit wird das Nutzsignal bei Ultraschallmessung in einem bestimmten Behältnis durch Subtraktion des dem bestimmten Behältnis zugeordneten und gespeicherten Störsignals von einem in dem bestimmten Behältnis gemessenen Ultraschallsignal ermittelt. Dieses Nutzsignal dient beispielsweise zur Berechnung der Füllstandshöhe des Behältnisses.

Denkbar ist es ebenso, das Störsignal innerhalb des gemessenen Ultraschallsignals auszublenden, indem beispielsweise die Signalwerte innerhalb des zeitlichen Bereichs, in dem das Störsignal auftritt oder vermutet wird, nach der Ultraschallmessung gelöscht werden.

Die Ermittlung des Störsignals mit Hilfe der Vergleichseinrichtung als auch die Bestimmung des Nutzsignals mit der Auswerteeinrichtung kann ebenso mit Hilfe aufwändigerer Algorithmen und Rechenvorschriften, beispielsweise mit Hilfe von Filterfünktionen, durchgeführt werden.

Bei einem Verfahren zum Bestimmen eines Nutzsignals aus einem mit einem Störsignal überlagerten Ultraschallsignal wird zunächst ein Ultraschallsignal in ein mit einem Medium bis zu einer Fullhöhe gefülltes Behältnis gesendet. Nach dem Empfangen eines aus dem Behältnis zurückkehrenden Ultraschallsignals wird dieses gespeichert. Das Senden, Empfangen und Speichern von Ultraschallsignalen wird bei verschiedenen Füllhöhen des Behältnisses wiederholt. Das Störsignal wird danach als ein in den gespeicherten Ultraschallsignalen trotz verschiedener Füllhöhen gemeinsam vorhandener Signalanteil bei den den gespeicherten Ultraschallsignalen zugrunde liegenden Messungen ermittelt. Das Nutzsignal einer Ultraschallmessung wird nun durch Subtraktion des zuvor ermittelten und gespeicherten Störsignals vom empfangenen Ultraschallsignal der Ultraschallmessung bestimmt. Bei nachfolgenden Ultraschallmessungen wird das Nutzsignal ebenso durch Subtraktion des gespeicherten Störsignals vom empfangenen Ultraschallsignal ermittelt. Somit kann die Ermittlung des Störsignals als eine auf ein Behältnis bezogene Kalibriermessung verstanden werden und verschiedene Behältnisse können auf diese Art und Weise kalibriert werden.

Weitere Merkmale und Vorteile der Erfindung werden aus der nachfolgenden Beschreibung mit Bezug auf die Zeichnungen ersichtlich. Es zeigen:
- Fig. 1: eine schematische dreidimensionale Ansicht eines Behältnisses mit angekoppeltem Ultraschallwandler gemäß dem Stand der Technik;
- Fig. 2: eine schematische Ansicht von unten auf die Anordnung in Fig. 1;
- Fig. 3: eine schematische Seitenansicht der Anordnung in Fig. 1;
- Fig. 4: eine schematische Vorderseitenansicht der Anordnung in Fig. 1;
- Fig. 5: ein empfangenes Ultraschallsignal einer Ultraschallmessung der Anordnung in Fig. 1;
- Fig. 6: eine schematische dreidimensionale Ansicht eines Behältnisses mit erfindungsgemäß angekoppeltem Ultraschallwandler;
- Fig. 7: eine schematische Ansicht von unten auf die in Fig. 6 dargestellte erfindungsgemäße Anordnung;
- Fig. 8: eine schematische Seitenansicht auf die in Fig. 6 erfindungsgemäß dargestellte Anordnung;
- Fig. 9: eine schematische Vorderseitenansicht auf die in Fig. 6 dargestellte erfindungsgemäße Anordnung;
- Fig. 10: eine schematische Ansicht von unten auf die in Fig. 6 dargestellte erfindungsgemäße Anordnung;
- Fig. 11: ein schematisch dargestelltes Ultraschallsignal einer Ultraschallmessung der erfindungsgemäßen Anordnung in Fig. 6;
- Fig. 12: eine schematische Seitenansicht eines Behältnisses sowie einer Ankoppelvorrichtung mit Ultraschallwandler; und
- Fig. 13: eine schematische Ansicht von unten auf die erfindungsgemäße Anordnung in Fig. 12.

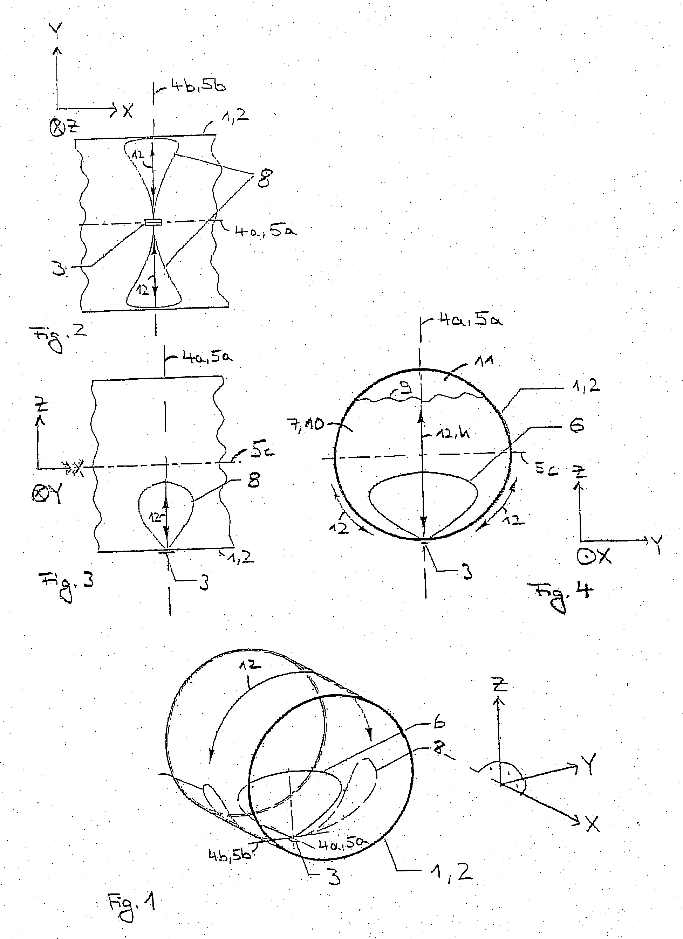

Fig. 1 zeigt in einer schematischen dreidimensionalen Darstellung einen zylinderförmigen Teil 1 eines Behältnisses 2, an das von unten ein Ultraschallwandler 3 gemäß dem Stand der Technik ankoppelt. Die Fig. 2 bis Fig. 4 zeigen Ansichten auf die Anordnung von Fig. 1, wobei Fig. 2 eine Ansicht von unten, Fig. 3. eine schematische Seitenansicht und Fig. 4 eine schematische Vorderseitenansicht darstellt. Der Übersichtlichkeit halber und zur besseren Darstellung der Ausrichtung zwischen dem Ultraschallwandler 3 und dem Behältnis 2 ist in Fig. 1 und weiteren Figuren eine den Ultraschallwandler 3 tragende und an dem Behältnis 2 haltende Ankoppelvorrichtung nicht dargestellt.

Bei der in Fig. 1 dargestellten, aus dem Stand der Technik bekannten Ankopplung des Ültraschallwandlers 3 an das Behältnis 2 weist der rechteckförmig ausgebildete Ultraschallwandler 3 Symmetrieebenen 4a und 4b auf. Ebenso hat das Behältnis 2 Symmetrieebenen 5a und 5b, die mit den Symmetrieebenen 4a und 4b des Ultraschallwandlers 3 übereinstimmen. Ein über den Ultraschallwandler 3 in das Behältnis 2 eingekoppeltes Ultraschallsignal breitet sich mit einem Schallfeld 6 in ein Medium 7 innerhalb des Behältnisses 2 aus (siehe Fig. 4).

Wegen der Formelastizität des als Festkörper ausgebildeten Behältnisses 2 breitet sich ebenso eine Ultraschallwelle mit einem Schallfeld 8 als Transversalwelle entlang der Behältniswand aus.

Zur Bestimmung einer Füllhöhe h des Mediums 7 innerhalb des Behältnisses 2 dient lediglich die sich mit dem Schallfeld 6 ausbreitende Ultraschallwelle. Diese wird, wie in Fig. 4 ersichtlich ist, an einer Phasengrenzfläche 9, beispielsweise der Grenzfläche zwischen einer als Medium 7 dienenden Flüssigkeit 10 und einem Gas 11, innerhalb des Behältnisses 2 reflektiert, kehrt zum Einkoppelort der Ultraschallwelle, dem Ultraschallwandler 3, zurück und wird dort empfangen. Aus der Laufzeit dieser Ultraschallwelle lässt sich die Füllhöhe h berechnen.

Die in Fig. 1 dargestellte übliche, symmetrische Anordnung zwischen dem Ultraschallwandler 3 und dem Behältnis 2 bringt den Nachteil mit sich, dass die mit dem Schallfeld 8 sich entlang der Behältniswand ausbreitende Ultraschallwelle nach einmaligem Umlaufen der zylinderförmigen Behältniswand zum Einkoppelort des Ultraschallwandlers 3 zurückkehrt und dort empfangen wird. Die Ultraschallwelle umläuft die Behältniswand aus entgegengesetzten Richtungen, was durch Darstellung bidirektionaler Ausbreitungsrichtungen 12 des Schallfelds 8 hervorgehoben ist. Beide Teilwellen des Schallfelds 8 führen nach einmaligem Umlauf über die Behältniswand am ursprünglichen Einkoppelort zu einem verstärkten Signal, das von dem Ultraschallwandler 3 empfangen wird.

Die in Fig. 2 gezeigte schematische Ansicht von unten auf die in Fig. 1 gezeigte Anordnung verdeutlicht, dass die Symmetrieebenen 4a und 4b des rechteckförmig ausgebildeten Ultraschallwandlers 3 mit den Symmetrieebenen 5a und 5b des zylinderförmigen Teils 1 des Behältnisses 2 gemeinsam sind. Das sich entlang der Behältniswand ausbreitende Schallfeld 8 kehrt nach Umlaufen der Behältniswand zum Ultraschallwandler 3 zurück. Dies ist in Fig. 2 durch eine entsprechende Darstellung von der entgegengesetzt bidirektionalen Ausbreitungsrichtungen 12 gezeigt. Das sich in Fig. 2 nach oben (d.h. in positiver Y-Richtung) ausbreitende Schallfeld 8 kehrt somit nach einmaligem Umlaufen der Behältniswand von unten zurück zum Ultraschallwandler 3. Selbiges gilt für das sich nach unten ausbreitende Schallfeld 8, welches in Fig. 2 von oben zum ursprünglichen Einkoppelort, dem Ultraschallwandler 3, zurückkehrt. Da die beiden in Fig. 2 dargestellten Schallfelder 8 denselben Umlaufweg bis zur Rückkehr zum Ultraschallwandler 3 aufweisen, kommen sie zeitgleich am ursprünglichen Einkoppelort an, was zu einer Verstärkung des vom Ultraschallwandler 3 empfangenen Signals führt.

Die in Fig. 3 gezeigte schematische Seitenansicht der in Fig. 1 dargestellten Anordnung bringt die Gemeinsamkeit der Symmetrieebene 4a des Ultraschallwandlers 3 mit der Symmetrieebene 5a des Behältnisses 2 von einer weiteren Perspektive aus betrachtet zum Ausdruck.

Die weiter oben mit Hilfe der Fig. 4. beschriebene Bestimmung der Füllhöhe h des Mediums 7 mit Hilfe des Schallfeldes 6 wird erheblich erschwert oder verfälscht, weil sich das entlang der Behältniswand ausbreitende Schallfeld 8 am ursprünglichen Einkoppelort mit dem Schallfeld 6 überlagert oder nach einer für das Schallfeld 6 typischen Laufzeit vom Ultraschallwandler 3 empfangen wird. Wird die Laufzeit des Schallfelds 6 fälschlicherweise zur Bestimmung der Füllhöhe h herangezogen, so liefert die Ultraschallmessung falsche Füllhöhen h.

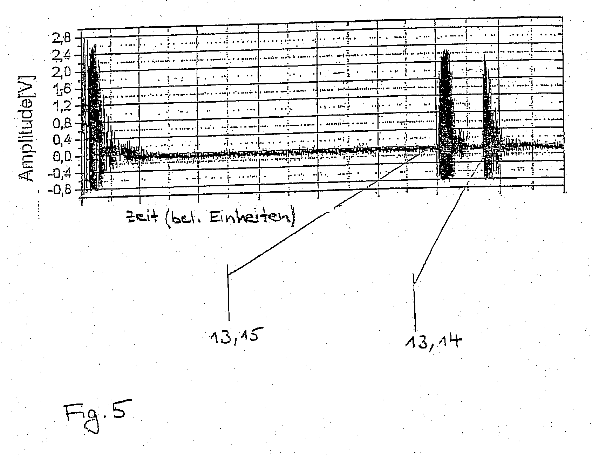

Fig. 5 zeigt eine schematische Darstellung eines vom Ultraschallwandler empfangenen Ultraschallsignals 13. Die Darstellung zeigt Amplitudenmesswerte (in Volt) des vom Ultraschallwandler 3 empfangenen Ultraschallsignals 13 über der Zeit (in beliebigen Einheiten) skizziert und betrifft eine Ultraschallmessung der in Fig. 1 dargestellten Anordnung üblicher Art.

Dem als Nutzsignal 14 dargestellten empfangenen Schallfeld 6 aus dem Medium 7 innerhalb des Behältnisses 2 ist zeitlich das als Störsignal 15 empfangene Schallfeld 8 der sich in der Behältniswand ausbreitenden Ultraschallwelle vorgelagert. Das Störsignal 15 und das Nutzsignal 14 weisen Amplituden mit ähnlichen Werten auf und liegen zeitlich nahe beieinander, was auf die symmetrische Anordnung zwischen dem Ultraschallwandler 3 sowie dem Behältnis 2 zurückzuführen ist. Wird zur Bestimmung der Füllhöhe h des Mediums 7 innerhalb des Behältnisses 2 nach dem Senden des Ultraschallsignals 13 die Laufzeit des ersten zurückkehrenden Signals 15 herangezogen, so führt dies bei einem wie in Fig. 5 dargestellten Signalverlauf zur Ermittlung von falschen Füllhöhen h, da fälschlicherweise die Laufzeit des Störsignals 15 zur Berechnung der Füllhöhe h dient. Der in Fig. 5 exemplarisch dargestellte Verlauf des Ultraschallsignals 13 verdeutlicht auf eindrucksvolle Art und Weise, wie wünschenswert es wäre, das Störsignal 15 zu unterdrücken oder vom Nutzsignal 14 zu trennen.

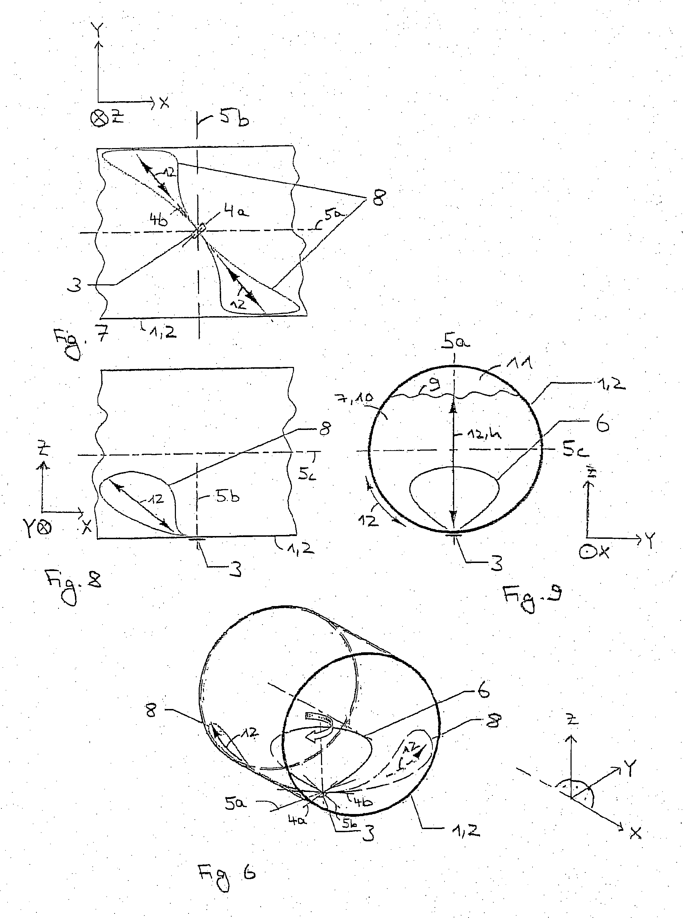

Fig. 6 zeigt eine schematische dreidimensionale Ansicht auf den zylinderförmigen Teil 1 des Behältnisses 2, an das der Ultraschallwandler 3 von unten erfindungsgemäß asymmetrisch ankoppelt. Die Fig. 7 bis Fig. 9 zeigen Ansichten auf die Anordnung in Fig. 6, wobei Fig. 7 eine Ansicht von unten, Fig. 8. eine schematische Seitenansicht und Fig. 9 eine schematische Vorderseitenansicht darstellt.

Hierbei unterscheiden sich in Fig. 6 die Symmetrieebenen 4a und 4b des Ultraschallwandlers 3 von den Symmetrieebenen 5a und 5b des Behältnisses 2. Dies hat zur Folge, dass das Schallfeld 8 des Störsignals 15 nach einmaligem Umlaufen des zylinderförmigen Teils 1 des Behältnisses 2 in vorteilhafter Weise nicht, stark gedämpft oder mit deutlichem zeitlichem Abstand zum Einkoppelort, dem Ultraschallwandler 3, zurückkehrt. Dies wird in Fig. 6 durch die unidirektional dargestellte Ausbreitungsrichtung 12 des Schallfelds 8 hervorgehoben. Es sei an dieser Stelle darauf hingewiesen, dass das Schallfeld 6, 8, insbesondere die Orientierung des Schallfeldes 6, 8 des Ultraschallwandlers durch die Symmetrieebenen 4a und 4b des Ultraschallwandlers 3 definierbar ist.

Fig. 7 zeigt eine Ansicht von unten auf die in Fig. 6 dargestellte Anordnung und verdeutlicht in anschaulicher Weise die asymmetrische Ausrichtung des Ultraschallwandlers 3 zum Behältnis 2, da die beiden Symmetrieebenen 4a und 4b des rechteckförmig ausgebildeten Ultraschallwandlers 3 verschieden sind von den Symmetrieebenen 5a und 5b des zylinderförmigen Teils 1 des Behältnisses 2. Dadurch breitet sich das Schallfeld 8 des Störsignals 15 asymmetrisch in Bezug zu den Symmetrieebenen 5a und 5b des Behältnisses 2 aus, was zu den mit Hilfe von Fig. 6 beschriebenen Vorteilen wie beispielsweise der Dämpfung des Störsignals 15 führt.

Die in Fig. 8 gezeigte schematische Seitenansicht der in Fig. 6 dargestellten Anordnung bringt die asymmetrische Ausrichtung zwischen dem Ultraschallwandler 3 und dem Behältnis 2 von einer weiteren Perspektive aus betrachtet mit Hilfe des Schallfelds 8 zum Ausdruck.

Unabhängig von der asymmetrischen Ausrichtung des Ultraschallwandlers 3 zum Behältnis 2 lässt sich mit Hilfe des in der schematischen Vorderseitenansicht in Fig. 9 dargestellten Schallfelds 6 des Nutzsignals 15 die Füllhöhe h bestimmen. Hierzu wird wie bei der in den Fig. 1 bis Fig. 4 gezeigten symmetrischen Ausrichtung die Laufzeit des Schallfelds 6 von der Unterseite des Behältnisses 2 bis zur Phasengrenze 9 und zurück zum Schallwandler 3 ermittelt und daraus die Füllhöhe h bestimmt.

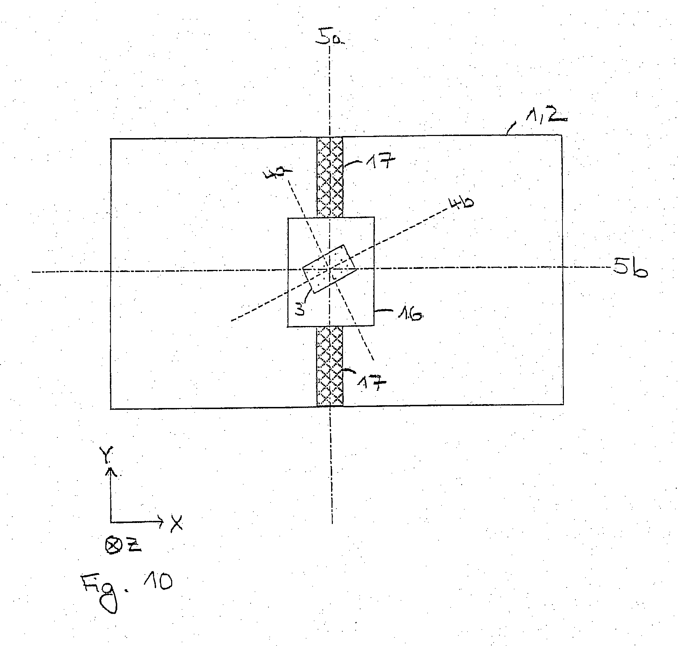

Fig. 10 zeigt schematisch dargestellt eine Ansicht von unten auf die in Fig. 6 dargestellte Anordnung. Ergänzend zu der in Fig. 7 ebenfalls dargestellten Ansicht von unten auf die in Fig. 6 dargestellte Anordnung ist in Fig. 10 eine den Ultraschallwandler 3 tragende Ankoppelvorrichtung 16 gezeigt, welche den Ultraschallwandler 3 mit Hilfe eines um das zylinderförmige Behältnis 2 gespannten Spanngurts 17 ankoppelt. Eine derartige, an sich bekannte (DE-A-103 31 044) Ankopplung des Ultraschallwandlers 3 an das Behältnis 2 erlaubt eine einfache Ankopplung und Entkopplung des Ultraschallwandlers 3 und ermöglicht damit den Einsatz der Ankoppelvorrichtung 16 für Ultraschallmessungen in wechselnden, unterschiedlichen Behältnissen 2 mit verschiedener Geometrie.

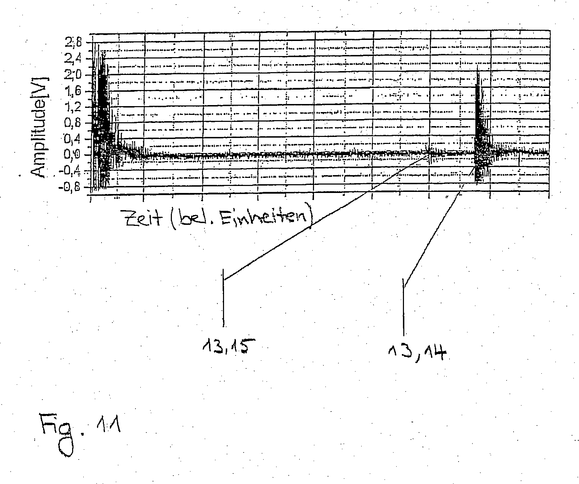

Fig. 11 zeigt ein mit einer Amplitude (in Volt) über einem Zeitbereich (in beliebigen Einheiten) dargestelltes Ultraschallsignal 13, das bei einer Ultraschallmessung mit der in Fig. 6 dargestellten Anordnung vom Ultraschallwandler 3 empfangen wurde. Durch die erfindungsgemäße asymmetrische Anordnung zwischen dem Ultraschallwandler 3 und dem Behältnis 2 ist das dem Nutzsignal 14 zeitlich vorgelagerte Störsignal 15 im Vergleich zum Nutzsignal 14 erheblich abgeschwächt/gedämpft ausgebildet und kaum mehr erkennbar. Das Störsignal 15 entspricht dem in Fig. 7 dargestellten Anteil des Schallfelds 8, das nach einmaligem Umlaufen der zylindrischen Behältniswand zum Einkoppelort zurückkehrt. Aufgrund der asymmetrischen Anordnung ist die Amplitude des Störsignals 15 verglichen mit der in Fig. 5 dargestellten entsprechenden Amplitude bei symmetrischer Ausrichtung erheblich schwächer ausgebildet und zusätzlich schwer vom Signalrauschen zu unterscheiden. Somit kann mit sehr großer Wahrscheinlichkeit ausgeschlossen werden, dass das Störsignal 15 fälschlicherweise als Nutzsignal 14 erkannt wird. Eine korrekte Ermittlung der Füllhöhe h ist somit gewährleistet.

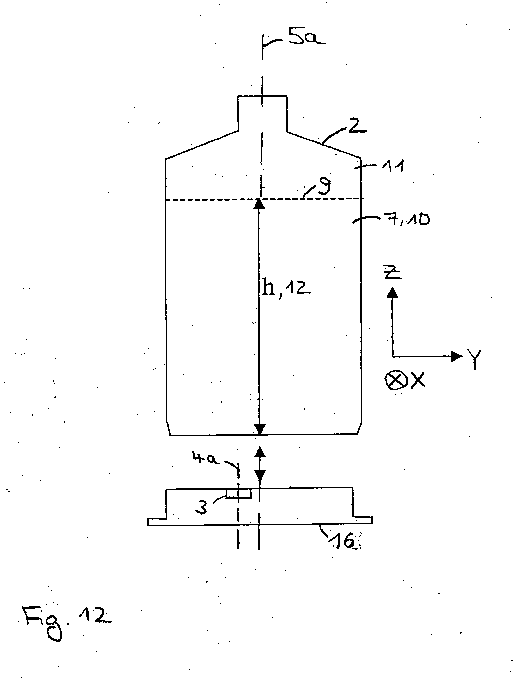

Fig. 12 zeigt eine weitere Ausführungsform der Erfindung mit dem als Gasflasche ausgebildeten Behältnis 2, dessen Gewichtskraft zur Ankopplung an den Ultraschallwandler 3 und die ihn tragende Ankoppelvorrichtung 16 dient. Das als Flüssigkeit 10 innerhalb des Behältnisses 2 ausgebildete Medium 7 wird oberhalb der Füllhöhe h durch die Phasengrenzfläche 12 flüssig/gasförmig von dem Gas 11 getrennt. Die durch die Ankoppelvorrichtung 16 vorbestimmte Ausrichtung zwischen dem Ultraschallwandler 3 und dem Behältnis 2 führt zu einer Symmetrieebene 4a des Ultraschallwandlers 3, die von der Symmetrieebene 5a des Behältnisses 2 verschieden ist.

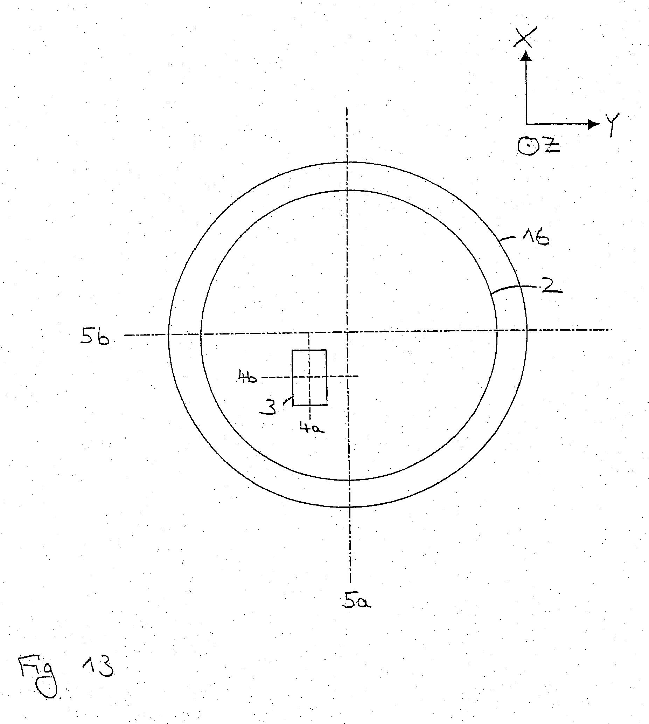

Fig. 13 zeigt eine schematische Aufsicht auf die in Fig. 12 dargestellte Anordnung nach Ankopplung des Ultraschallwandlers 3 an die Gasflasche. In vorteilhafter Weise ist der rechteckförmig ausgebildete Ultraschallwandler 3 durch die Ankoppelvorrichtung 16 erfindungsgemäß asymmetrisch zum Behältnis 2 (Gasflasche) angeordnet. Dies ist durch die von den Symmetrieebenen 5a und 5b des Behältnisses 2 verschiedenen Symmetrieebenen 4a und 4b des Ultraschallwandlers 3 veranschaulicht. Die asymmetrische Ausrichtung führt zur vorteilhaften Abschwächung des vom Ultraschallwandler 3 empfangenen Störsignals 15, wie beispielsweise mit Hilfe der Fig. 6 bis Fig. 11 weiter oben gezeigt und beschrieben ist.

## Patentansprüche

1. Füllstandsmesssystem, mit einer Ultraschall-Messvorrichtung und einem Behältnis, wobei
- das Behältnis zur Aufnahme eines Mediums (7) geeignet ist und einen zylinderförmigen Teil (1) aufweist;
mit
- einem Ultraschallwandler (3) zum Senden von Ultraschallsignalen (13) in das Behältnis (2) und zum Empfangen von Ultraschallsignalen (13) aus dem Behältnis (2);
- einer den Ultraschallwandler (8) tragenden Ankoppelvorrichtung (16) zur Bildung einer zur Ultraschallübertragung geeigneten Ankopplung zwischen dem Ultraschallwandler (3) und einer äußeren Oberfläche des Behältnisses (2);
wobei
- die Ankoppelvorrichtung (16) zur Ankopplung des Ultraschallwandlers (3) an die äußere Oberfläche des Behältnisses (2) ausgestaltet ist; und
- die Ankoppelvorrichtung (16) eine vorbestimmte Ausrichtung zwischen dem Ultraschallwandler (3) und dem Behältnis (2) bewirkt; und wobei
- der Ultraschallwandler (3) ein piezoelektrischer Dickenschwinger ist; **dadurch gekennzeichnet, dass**
- die Oberfläche des Ultraschallwandlers (3) zwei Symmetrieebenen (4a,4b) aufweist und rechteckförmig ausgebildet ist; und dass
- die Ankoppelvorrichtung (3) bei Ankopplung des Ultraschallwandlers (3) an die äußere Oberfläche des Behältnisses (2) eine asymmetrische Ausrichtung zwischen dem Ultraschallwandler (3) und dem Behältnis (2) derart bereitstellt, dass der Ultraschallwandler (3) und das Behältnis (2) keine gemeinsame Symmetrieebene (4a,4b,5a,5b,5c) haben.

2. Füllstandsmesssystem nach Anspruch 1,
**dadurch gekennzeichnet, dass**
der Ultraschallwandler (3) und die Ankoppelvorrichtung (16) keine gemeinsame Symmetrieebene (4a,4b,5a,5b,5c) haben.

3. Füllstandsmesssystem nach einem der Ansprüche 1 oder 2,
**dadurch gekennzeichnet. dass**
die Ankoppelvorrichtung (16) zur Ankopplung des Ultraschallwandlers (3) an die äußere Oberfläche des zylindrischen Teils (1) des Behältnisses (2) ausgestaltet ist.

4. Füllstandsmesssystem nach einem der Ansprüche 1 bis 3,
**dadurch gekennzeichnet. dass**
eine feste Ausrichtung des Ultraschallwandlers (3) zum Behältnis (2) durch Klebung der Ankoppelvorrichtung (16) an das Behältnis (2) herstellbar ist.

5. Füllstandsmesssystem nach einem der Ansprüche 1 bis 4,
**dadurch gekennzeichnet, dass**
eine feste Ausrichtung des Ultraschallwandlers (3) zum Behältnis (2) durch eine an das Behältnis (2) anpressbare Ankoppelvorrichtung (16) herstellbar ist.

6. Füllstandsmesssystem nach Anspruch 5,
**dadurch gekennzeichnet, dass**
die Anpassung des Ultraschallwandlers (3), an das Behältnis (2) mit einem die Ankoppelvorrichtung (16) und das Behältnis (2) umschliessenden Spanngurt (17) herstellbar ist.

7. Füllstandsmesssystem nach Anspruch 5,
**dadurch gekennzeichnet, dass**
die Anpressung des Ultraschallwandlers (3) an das Behältnis (2) durch Anklemmen der Ankoppelvorrichtung (16) an das Behältnis (2) herstellbar ist.

8. Füllstandsmesssystem nach einem der Ansprüche 1 bis 7,
**gekennzeichnet durch**
- eine Speichereinrichtung, mit der Ultraschallsignale als eine Abfolge von Messwerten speicherbar sind;
- eine Vergleichseinrichtung für verschiedene gespeicherte Ultraschallsignale (13), die derart ausgebildet ist, dass ein Störsignal (15) als Abfolge von Messwerten ermittelbar ist, welches einem in der Abfolge der Messwerte der zu vergleichenden verschiedenen Ultraschallsignale (13) jeweils gemeinsam vorhandenen Messwertanteil entspricht;
- eine Auswerteeinrichtung, mit der ein Nutzsignal (14) **durch** Subtraktion des gespeicherten Störsignals (15) von einem Ultraschallsignal (13) ermittelbar ist.

## Claims

1. Measuring system for measuring a filling level having a ultrasound measuring device and a container, wherein
- the container is suited to take up a medium (7) and comprises a cylinder-shaped part (1);
comprising
- an ultrasound transducer (3) for emitting ultrasound signals (13) into the container (2), and for receiving ultrasound signals (13) from the container (2);
- a coupling device (16) supporting the ultrasound transducer (3) for forming a coupling that is suitable for the transmission of ultrasound between the ultrasound transducer (3) and an external surface of the container (2); wherein
- the coupling device (16) is provided for coupling the ultrasound transducer (3) to the external surface of the container (2); and
- the coupling device (16) is provided for effecting an predetermined alignment of the ultrasound transducer (3) with respect to the container (2);
- the ultrasound transducer (3) is a piezo-electric vibrator;
**characterized in that**
- the surface of the ultrasound transducer possesses two planes of symmetry (4a, 4b) and is provided to be rectangular in shape; and **in that**
the coupling device (16), upon coupling of the ultrasound transducer (3) to the external surface of the container (2), provides for asymmetrical alignment of the ultrasound transducer (3) with respect to the container (2) such that the ultrasound transducer (3) and the container (2) have no plane of symmetry (4a,4b,5a,5b,5c) in common.

2. Measuring system for measuring a filling level according to claim 1, **characterized in that**
the ultrasound transducer (3) and the coupling device (16) have no plane of symmetry (4a,4b,5a,5b,5c) in common.

3. Measuring system for measuring a filling level according to claim 1 or 2, **characterized in that**
- the coupling device (16) is provided for coupling the ultrasound transducer (3) to the external surface of the cylinder-shaped part (1) of the container (2).

4. Measuring system for measuring a filling level according to any one of the claims 1 to 3,
**characterized in that**
a fixed alignment of the ultrasound transducer (3) with respect to the container (2) can be produced by gluing the coupling device (16) to the container (2).

5. Measuring system for measuring a filling level according to any one of the claims 1 to 4,
**characterized in that**
a fixed alignment of the ultrasound transducer (3) with respect to the container (2) can be produced by means of a coupling device (16) that can be pressed against the container (2).

6. Measuring system for measuring a filling level according to claim 5, **characterized in that**
the pressing of the ultrasound transducer (3) against the container (2) can be provided by means of a tensioning belt (17) that surrounds the coupling device (16) and the container (2).

7. Measuring system for measuring a filling level according to claim 5, **characterized in that**
the pressing of the ultrasound transducer (3) against the container (2) can be provided by means of clamping the coupling device (16) to the container (2).

8. Measuring system for measuring a filling level according to any one of the claims 1 to 7,
**characterized by**
- a memory facility that can be used to store ultrasound signals in the form of a series of measuring values;
- a comparing facility for various stored ultrasound signals (13) that is provided such that an interfering signal (15) can be determined in the form of a series of measuring values and corresponds to a measuring value component that is common to each of the series of measuring values of the various ultrasound signals (13) that are to be compared;
- an analytical facility that can be used to determine a useful signal (14) by subtracting the stored interfering signal (15) from an ultrasound signal (13).

## Revendications

1. Système de mesure de niveau avec un dispositif de mesure à ultrasons et un récipient,
- le récipient étant apte à recevoir un fluide (7) et comportant une partie cylindrique (1) ;
avec
- un transducteur à ultrasons (3) pour envoyer des signaux ultrasonores (13) dans le récipient (2) et recevoir des signaux ultrasonores (13) à partir dudit récipient (2) ;
- un dispositif de couplage (16) qui porte le transducteur à ultrasons (8) et qui est destiné à pour former un couplage, approprié pour une transmission d'ultrasons, entre ledit transducteur à ultrasons (3) et une surface extérieure du récipient (2) ;
- le dispositif de couplage (16) étant conçu pour le couplage du transducteur à ultrasons (3) à la surface extérieure du récipient (2) ; et
- le dispositif de couplage (16) provoquant une orientation prédéfinie entre le transducteur à ultrasons (3) et le récipient (2) ; et
- le transducteur à ultrasons (3) étant un oscillateur d'épaisseur piézoélectrique ;
**caractérisé en ce que**
- la surface du transducteur à ultrasons (3) présente deux plans de symétrie (4a, 4b) et a une forme rectangulaire ; et **en ce que**
- le dispositif de couplage (3), lors du couplage du transducteur à ultrasons (3) à la surface extérieure du récipient (2), offre une orientation asymétrique entre le transducteur à ultrasons (3) et le récipient (2) de telle sorte que ledit transducteur à ultrasons (3) et ledit récipient (2) ne présentent pas de plan de symétrie (4a, 4b, 5a, 5b, 5c) commun.

2. Système de mesure de niveau de remplissage selon la revendication 1,
**caractérisé en ce que** le transducteur à ultrasons (3) et le dispositif de couplage (16) ne présentent pas de plan de symétrie (4a, 4b, 5a, 5b, 5c) commun.

3. Système de mesure de niveau de remplissage selon l'une des revendications 1 ou 2,
**caractérisé en ce que** le dispositif de couplage (16) est conçu pour le couplage du transducteur à ultrasons (3) à la surface extérieure de la partie cylindrique (1) du récipient (2).

4. Système de mesure de niveau de remplissage selon l'une des revendications 1 à 3,
**caractérisé en ce qu'**une orientation fixe du transducteur à ultrasons (3) par rapport au récipient (2) est apte à être obtenue par collage du dispositif de couplage (16) sur le récipient (2).

5. Système de mesure de niveau de remplissage selon l'une des revendications 1 à 4,
**caractérisé en ce qu'**une orientation fixe du transducteur à ultrasons (3) par rapport au récipient (2) est apte à être obtenue grâce à un dispositif de couplage (16) apte à être pressé contre le récipient (2).

6. Système de mesure de niveau de remplissage selon la revendication 5,
**caractérisé en ce que** l'adaptation du transducteur à ultrasons (3) au récipient (2) est apte à être obtenue avec une sangle (17) qui entoure le dispositif de couplage (16) et le récipient (2).

7. Système de mesure de niveau de remplissage selon la revendication 5,
**caractérisé en ce que** la pression du transducteur à ultrasons (3) contre le récipient (2) est apte à être obtenue par serrage du dispositif de couplage (16) contre le récipient (2).

8. Système de mesure de niveau de remplissage selon l'une des revendications 1 à 7,
**caractérisé par**
- un dispositif de mémoire avec lequel des signaux ultrasonores sont aptes à être mis en mémoire sous la forme d'une succession de valeurs de mesure ;
- un dispositif comparateur pour différents signaux ultrasonores (13) mis en mémoire, qui est conçu de telle sorte qu'un signal de défaut (15) soit apte à être déterminé sous la forme d'une succession de valeurs de mesure, lequel signal (15) correspond à une part de valeurs de mesure commune présente dans la succession de valeurs de mesure des différents signaux ultrasonores (13) à comparer ;
- un dispositif d'analyse avec lequel un signal (14) est apte à être déterminé par soustraction du signal de défaut (15) mis en mémoire, d'un signal ultrasonore (13).
